# EUROPEAN PATENT SPECIFICATION

(11) **EP 4 319 938 B1**
(45) Date of publication and mention of the grant of the patent: **05.06.2024**
(21) Application number: 21727625.2
(22) Date of filing: 08.04.2021
(51) Int. Cl.: B23K 26/342, B23K 26/354, B23K 26/352, B23K 26/12

(54) **METHOD FOR TREATMENT OF A SLIDING SURFACE ON METALLIC MACHINE PART**
VERFAHREN ZUR BEHANDLUNG EINER GLEITFLÄCHE AUF EINEM METALLISCHEN MASCHINENTEIL
PROCÉDÉ DE TRAITEMENT D'UNE SURFACE DE GLISSEMENT SUR UNE PIÈCE DE MACHINE MÉTALLIQUE

(30) Priority: 06.04.2021 SI 202100068
(43) Date of publication of application: 14.02.2024
(73) Proprietor: Univerza V Ljubljani, 1000 Ljubljana (SI)
(72) Inventor: KALIN, Mitjan, 1358 Log pri Brezovici (SI)
(74) Representative: Borstar, Dusan
(86) International application number: PCT/SI2021/000004
(87) International publication number: WO 2022/216237

(56) References cited:
- DE-A1-102018 206 320
- US-A1- 2016 121 430
- US-A1- 2018 369 897
- TOWNSEND A ET AL: "Surface texture metrology for metal additive manufacturing: a review", PRECISION ENGINEERING, ELSEVIER, AMSTERDAM, NL, vol. 46, 7 June 2016 (2016-06-07), pages 34-47, XP029659308, ISSN: 0141-6359, DOI: 10.1016/J.PRECISIONENG.2016.06.001

## Description

The proposed invention relates to a method for treatment of a sliding surface on metallic machine part, namely on an external surface of a mechanically strained machine part, which is during use under predetermined stress conditions in contact with an opposite sliding surface of another machine part, which is cooperating with said machine part, and therefore during such use its sliding surface is exposed to friction and wear, despite to a layer of lubricant being present there-between. According to the International Patent Classification, solutions and methods of this sort, relating to the relevant technology field, belong in the field of treatment, namely treatment of metallic objects, especially treatment using a laser beam, where metallic materials in powder form are used.

The invention is based on a problem, how to design a sufficiently fast and economic method for treatment of a sliding surface on metallic machine part, by means of which, on a flat pre-treated surface of each mechanically metallic machine part, a dimpled structure can be ensured, namely with respect to dimensions and shape properly defined pattern of surface indentations of each predetermined depth, dimensions and shape, and wherein no further processing of a surface, obtained by using such treatment, would be required before the use of said part.

It is known to persons skilled in the art, that in order to improve tribological properties on each other contacting sliding surfaces of machine parts, a measure can be taken, where on each sliding surface a dimpled structure is ensured, namely a pattern of surface indents of at least roughly defined shape and dimensions. Such a structure on one hand ensures the possibility of retaining the lubricant within indentations, by reducing the areas which are actively in contact with each other and consequentially reducing friction, wherein a permanent lubricant coverage of said actively cooperating surface areas can be ensured, and moreover, despite satisfactory lubrication, certain shear forces resulting from the viscosity of the lubricant are still present, but are herewith also reduced. In such way, an essential reduction can be achieved in view of friction and wear, which both result from contact forces on the surface of each machine part is achieved.

The relevant background as described by the invention, is disclosed in certain prior art documents, like e.g. WO 2008/047 062 A3, and moreover also in technical literature and public available technical articles, like e.g. Townsend A., et al., A Review of Surface Texture Metrology for Additive Manufacturing of Metal Parts, Precision Engineering 2016*.*

It is also known from the state of the art, that a dimpled structure in the form of an pattern of surface indentations of predetermined depth, dimensions and shape, on sliding surfaces can be realized in various ways. By implementing laser technology it is made possible, that indentations on the surface are made by using a laser i.e. by means of a laser beam, namely in such a way, that said laser beam, optionally a pulsing ray, is directed from a suitable source towards each predetermined area on the surface of the metallic machine part in such a way, that the material in the irradiated area on the surface of the machine part starts melting, wherein a crater of roughly circular shape and with at least roughly predetermined depth is formed. In this, a part of the melt exits the crater and is then deposited and accumulated above the plane of said sliding surface, forming a rim around the crated, which after cooling and solidification remains there. Namely, as soon such action of the laser ray incl. the heat supply towards the area of such crater is terminated. the material in said area of the crater is cooled and solidifies, so that said rim around such created indentation in the shape of a crater remains on the sliding surface even after the solidification of the material. For such reason, sanding and sometimes even polishing of the sliding surface is still required after such creation of the indentations is completed.

Extreme physical and chemical conditions and material processes, which usually occur during melting and solidification of the material by using a laser beam, therefore cause significant roughness and undulation, namely an unevenness of each treated surface and additionally cause quite unpredictable orientation and configuration of such obtained surface because of local modifications in the crystalline structure of the material in combinations with essential variations in view of cooling conditions. The probability of generating defects and cracks within the surface layers of a material, treated in such a manner, is also exceptionally high. Thus, a so-called integrity, namely regularity of a surface structure after a treatment with a laser beam is generally significantly worse than by a mechanically treated surface, and is in such treatment expected to be within the µm-or even in nm-ranges. Such reduced integrity of the treated surface causes difficulties with determining and optimising of other parameters, which need to be taken into account when ensuring tribological characteristics of each machine part. As known, said tribological characteristics like e.g. a friction coefficient, wearing resistance, or the like, greatly depend on the integrity of the surface, namely the topography, texture, roughness and defects, and at the same time also on the mechanical properties of the material, such as hardness, strength and presence of inherent internal stresses due to differences in the microstructure of the material.

Moreover, a method for manufacturing of a component by means of generative treatment is disclosed in DE 10 2018 206 320 A1.

The presented invention therefore generally refers to a method of treating of a sliding surface on a metallic machine part, namely a method, where said machine part comprises a pre-treated, sufficiently flat and smooth sliding surface at room or increased temperature, which is lower than the temperature of plasticizing or melting point of said metallic material, of which the machine part consists, is surrounded with a protective atmosphere, after which said sliding surface is treated by directing laser beams towards each predetermined areas on said surface. The laser beam is directed towards the material in each selected area for such time, which is sufficient that melting of the metallic material on the surface of the machine part is ensured. The movement of said laser beam across the surface is in principle predetermined and controlled, especially by using an appropriate computer algorithm, which ensures achieving each desired dimension on one hand, and on the other hand ensures achieving each desired distribution and density of areas on the surface of the machine part, which are exposed to said laser beam.

The method according to the invention is disclosed in claim 1.

In the preferred embodiment of the method according to the invention it is anticipated, that said metallic particles in powder form in each layer applied to each surface are metallic particles in powder form or optionally nanoparticles with a chemical composition, which is at least approximately similar to the chemical composition of the machine part in the area of its sliding surface.

In an alternative embodiment of a preferred method according to the invention it is anticipated, that said metallic particles in powder form in each layer applied to each surface are metallic particles in powder form or optionally nanoparticles with a chemical composition, which differs from the chemical composition of the machine part in the area of its sliding surface, however upon melting forms an alloy or at least enables fusing of particles with each other and with the material of the machine part.

According to the invention, the thickness of each applied layer of metallic particles in powder form on said sliding surface of the machine part is adjusted within a range between 5 and 100 µm. Furthermore, in said step ii) the laser beam is always directed towards the layer of metallic particles in powder form on said pre-treated flat and smooth sliding surface of the machine part within an area, the largest dimension of which, when observed on said surface, is 40 - 100 µm. Additionally, in step ii) between each neighbouring laser treated areas there are remaining untreated areas, which have not been exposed to the laser beam and the smallest dimension of which, when observed on said surface, is 5 - 50 µm. Preferably, and in order to generate a suitable laser beam, a laser with a power of 100 - 1000 W and laser beam movement speed of 50 - 5000mm/s is used, so that each achieved temperature in each exposed area should exceed at least 2000°C, and the intensity of treatment of the material in powder form said layer is at least 15 - 20 cm³/h. At the same time it is foreseen, that said protective atmosphere at least substantially consists of an inert gas or a mixture of inert gases.

In the continuation, the invention will be explained in more detail on the basis of an embodiment and in connection with the accompanying drawing, wherein
Fig. 1 is a schematic presentation of a chamber for performing surface treatment of each machine part busing a method according to the invention;
Fig. 2 is a cross section of a machine part, already treated by using said method; and
Fig. 3 a schematically presented machine part according to Fig. 2, in isometric view.

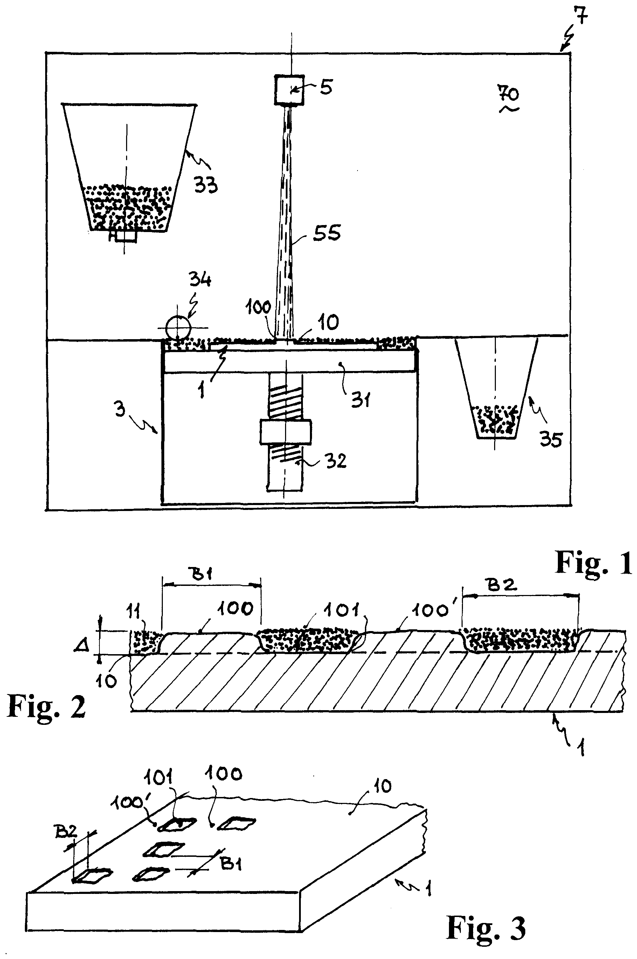

Method for treatment of a sliding surface 10 on a metallic machine part 1 can generally be carried out in an enclosed chamber 7 (Fig. 1), in which a protective atmosphere 70 can be established, with which oxidation or similar chemical reactions are prevented in the material of machine part 1 in a heated or molten state with one or more ingredients of the atmosphere, with which it is surrounded during treatment.

Each metallic machine part 1 is pre-treated and comprises a, prepared for further treatment according to the presented method, especially sufficiently flat and smooth sliding surface 10. Treatment of said sliding surface 10 according to the invention is carried out at room or increased temperature, which is lower than the temperature of plasticizing or melting point of said metallic material, of which each machine part 1 consists.

After said treatment, the sliding surface 10 is generally treated by directing of each laser beam 55 towards predetermined areas 100; 100' on said surface 10. The laser beam 55 is directed towards each area 100; 100' for sufficient time, that melting of the metallic material on the surface 10 is ensured in each area 100; 100' of each machine part 1, and at the same time also in the basic material of the machine part 1 underneath.

The laser 5, which is embedded within said chamber 7, is adjustable and controlled in such a way, that each movement of laser beam 55 across the surface 10 of each machine part 1 is predetermined and controlled, especially by using an appropriate computer algorithm, which ensures achieving each desired dimension B1, B2 on one hand, and on the other hand ensures achieving each desired distribution and density of areas 100; 100' on each surface 10 of each machine part 1.

The machine part 1 in the shown embodiment is placed onto a supporting plate 31 after being inserted into chamber 7. Said supporting plate 31 is installed in the tub 3, which is located inside said chamber 7, namely in such fashion, that its height can be adjusted by using appropriate means of adjustment 32, which is in Fig. 1 presented symbolically and merely for illustrative purposes as a screw spindle. Above said tub 3, inside the chamber, a container 33 is available for storage and supplying of the metallic powder material. Said tub 3 further comprises a means 34 of uniformly distributing said powder material across the surface 10 of said machine part 1, which is in Fig. 1 also just symbolically presented and is merely for illustrative purposes available as a cylinder. Additionally, said tub 3 comprises a collector 35 for collecting of each superfluous powder material.

The method of treatment according to the invention, namely for treatment of a mechanically pre-treated and thus sufficiently flat and smooth surface 10 of machine part 1, is achievable after the mounting of machine part 1 onto said supporting plate 31, which is then followed by closing the chamber 7 and establishing of each suitable protective atmosphere 70 inside of the chamber 7.

In the first step of the treatment, an uniformly distributed layer 11 of metallic particles in powder form is applied with a predetermined and uniform thickness Δ (Fig. 2) across said pre-treated, flat and smooth sliding surface 10 of each machine part 1, surrounded in said protective atmosphere 70. In a case, when the surface 10 is aligned with the upper plane of tub 3, this is simply achieved by moving the supporting plate 31 downwards for a distance of Δ, so that the supporting plate 31 is located at distance Δ below the upper plane of tub 3. Afterwards, the metallic material in powder form is supplied onto the surface of tub 3 from container 33, which is subsequently, by using said means 34, uniformly distributed across the surface 10 of machine part 1. This is a simple way of creating a layer 11 of uniformly distributed metallic material in powder form with a predetermined and uniform thickness Δ. At the same time, superfluous powder particles are deposited in said collector 35.

In the second step according to the invention, when the laser 5 is activated, a laser beam 55 is directed towards the predetermined area 100 on said surface 10 of each machine part 1, covered with a layer 11 of metallic particles in powder form, for at least such time period, that the powder particles together with the surface 10 underneath are completely or at least partially melted, namely to such extent, that they may fuse with each other and directly or indirectly also with said surface 10, which is optionally followed by moving the laser beam 55 towards the next area 100' on said surface 10 of each machine part 1, covered with a layer 11 of metallic particles in powder form.

The movement of the laser beam 55 is conducted with a predetermined speed along a predetermined path across the surface 10, so that the powder particles in layer 11 in accurately predetermined areas 100, 100', together with the surface 10 underneath are melted and fuse together, namely become inseparably connected. The shape and size B1 of areas 100, 100' can be determined in advance and can be either roughly round or roughly square or of any other desired and predetermined shape. It is therefore possible to create a predetermined pattern of elevations of relatively accurate outline and especially of a predetermined and uniform height on the surface 10. In the intermediate areas 101, which were not exposed to the effect of the laser beam 55 during operation of the laser 5, the layer 11 of metallic material in powder form at least partially retains its previous characteristics, therein the powder particles in said areas 101 of pre-determinable dimensions B2 remain unconnected with each other and with the surface 10 of the machine part 1, and can therefore be easily removed from said surface 10, which then leads to each desired indentations on the surface 10 of machine part 1. Such removal of said free particles from layer 11 is presented in the third step of executing the method according to the invention.

Whenever it is desired, that on the surface 10 such pattern of elevations would have to formed, which might essentially exceed a suitable thickness Δ for each single laser melting of said layer 11, comprising material in powder form, the step of applying material in powder form can be repeated once or several times, so that after each further movement of the supporting plate 31, for example for the distance Δ downwards again, a further layer 11 of the material in powder form is applied across the machine part 1 of the same or generally even different composition, the thickness of which is Δ after removing each excessive material in powder form by using said means 34 in the area of the previously formed elevations. If after activation of the laser 5, the laser beam 55 is directed towards the same areas 100, 100' as in the previous step, this again results in melting of the layer 11 of material in powder form only in predetermined areas 100, 100', that are exposed to the laser beam 55, whereas such melting does not occur in other areas 101, which were not exposed to the effect of the laser beam 55. In the unexposed areas 100 the particles of layer 11 of material in powder form remain unconnected with each other and with the surface 10 of the machine part 1 and can be quickly and easily removed from the surface 10 of the machine part. In each said area 101 of the surface 10 of machine part 1, an indentation remains with a flat bottom and of pre-determinable size B2, contour shape and depth.

Differing from the classic laser treatment according to the state of the art, the method according to the invention enables achieving optional and pre-determinable patterns, consisting of indentations and elevations on the surface 10 of the machine part 1, and moreover, the effect of the laser beam 55 on the surface 10 is significantly more manageable and controlled, which prevents the occurrence of defects and cracks, and consequently leads to significantly better integrity of the surface, which means that any further treatment of the surface 10 of machine part 1 is no longer required.

Said metallic particles in powder form in each layer 11, applied to each surface 10, are either metallic particles in powder form, optionally nanoparticles with a chemical composition, which is at least approximately similar to the chemical composition of the machine part 1 in the area of its sliding surface 10, or metallic particles in powder form, optionally nanoparticles with a chemical composition, which differs from the chemical composition of the machine part 1 in the area of its sliding surface 10, however upon melting allows formation of an alloy or at least enables fusing of particles with each other and with the material of the machine part 1.

According to the invention, the thickness Δ of each applied layer 11 of metallic particles in powder form on said sliding surface 10 of the machine part 1 is adjusted within a range between 5 and 100 µm. Furthermore, the laser beam 55 is always directed towards the layer 11 of metallic particles in powder form on said pre-treated flat and smooth sliding surface 10 of the machine part 1 within an area 100, 100', the largest dimension B1 of which, when observed on said surface 10, is 40 - 100 µm. At the same time, between each neighbouring laser treated areas 100, 100' there are remaining untreated areas 101, which have not been exposed to the laser beam 55, the smallest dimension B2 of which, again when observed on said surface 10, is 5 - 50 µm.

In order to generate a laser beam 55 suitable for performing of the method according to the invention, a laser 5 with a power of 100 - 1000 W and laser beam 55 movement speed of 50 - 5000 mm/s is used, so that each achieved temperature in each exposed area should exceed at least 2000°C, and the intensity of treatment of the material in powder form in layer 11 is at least 15 - 20 cm³/h, wherein as mentioned before, said protective atmosphere 70 at least substantially consists of an inert gas or a mixture of inert gases.

## Claims

1. Method of treating of a sliding surface (10) on a metallic machine part (1), which is suitable for sliding on a sliding surface of a machine counterpart, wherein said machine part (1), which comprises a pre-treated, sufficiently flat and smooth sliding surface (10) at room temperature or increased temperature, which is lower than the temperature of plasticizing or melting point of said metallic material, of which the machine part (1) consists, is surrounded by a protective atmosphere (70), after which said sliding surface (10) is treated by directing a laser beam (55) towards predetermined areas (100; 100') on said surface (10), namely for sufficient time that melting of the metallic material on the surface (10) is ensured in each selected area (100; 100') of said machine part (1), which is exposed to said laser beam (55), wherein the movement of said laser beam (55) across the surface (10) is predetermined and controlled, especially by using an appropriate computer algorithm, which ensures on the one hand achieving of each desired dimension (B1, B2), and on the other hand also achieving of each desired distribution and density of areas (100; 100') on said surface (10) of said machine part (1), which is exposed to said laser beams (55), **characterised in that** it comprises steps of
i) applying an uniformly distributed layer (11) of metallic particles in powder form with a predetermined and uniform thickness (Δ) across said pre-treated, flat and smooth sliding surface (10) of the machine part (1), surrounded by said protective atmosphere (70);
ii) directing said laser beam (55) towards each predetermined area (100) on said surface (10) of the machine part (1), covered with a layer (11) of metallic particles in powder form, for at least such time period, that the powder particles together with the surface (10) underneath are completely or at least partially melted, namely to such extent, that particles may fuse with each other and directly or indirectly also with said surface (10), which is optionally followed by moving the laser beam (55) towards the next area (100') on said surface (10) of the machine part (1), covered with a layer (11) of metallic particles in powder form; and
iii) removing any remaining with each other or with the surface (10) of the machine part (1) unfused i.e. unconnected metallic particles in powder form of said layer (11), from the surface (10) of the machine part (1),
wherein the thickness (Δ) of each applied layer (11) of metallic particles in powder form on said sliding surface (10) of the machine part (1) is adjusted within a range between 5 and 100 µm,
and wherein in said step ii) the laser beam (55) is always directed towards the layer (11) of metallic particles in powder form on said pre-treated flat and smooth sliding surface (10) of the machine part (1) within an area (100, 100'), the largest dimension (B1) of which, when observed on said surface (10), is 40 - 100 µm., and wherein in said step ii) between each neighbouring laser treated areas (100, 100') there are remaining untreated areas (101), which have not been exposed to the laser beam (55), the smallest dimension (B2) of which, when observed on said surface (10), is 5 - 50 µm.

2. Method according to Claim 1, wherein said steps i) to iii) are continued by subsequent steps, which include
iv) optionally placing an additional uniformly distributed layer (11) of metallic particles in powder form with a predetermined and uniform thickness (Δ) over a previously melted and solidified layer (11) on the pre-treated, flat and smooth sliding surface (10) of the machine part (1), surrounded by said protective atmosphere (70), wherein the thickness or composition of each additional layer (11) can also differ from the thickness or composition of each previous layer (11), which is again followed by exposure to laser beams (55) according to said step ii); and
v) final removal of all remaining with each other or with the surface (10) of each machine part (1) unfused i.e. unconnected metallic particles in powder form of said layer (11), from the surface (10) of the machine part (1).

3. Method according to Claim 1 or 2, **characterised in that** said metallic particles in powder form in each layer (11) applied to said surface (10) are metallic particles in powder form or optionally nanoparticles with a chemical composition, which is at least approximately similar to the chemical composition of the machine part (1) in the area of its sliding surface (10).

4. Method according to Claim 1 or 2, **characterised in that** said metallic particles in powder form in each layer (11) applied to the surface (10) are metallic particles in powder form or optionally nanoparticles with a chemical composition, which differs from the chemical composition of the machine part (1) in the area of its sliding surface (10), however upon melting forms an alloy or at least enables fusing of particles with each other and with the material of the machine part (1).

5. Method according to anyone of Claims 1 - 4, **characterised in that** in order to generate a laser beam (55) a laser (5) with a power of 100 - 1000 W and laser beam (55) movement speed of 50 - 5000mm/s is used, so that each achieved temperature in each exposed area should exceed at least 2000°C, and the intensity of treatment of the material in powder form in said layer (11) is at least 15 - 20 cm³/h.

## Patentansprüche

1. Verfahren zur Behandlung einer Gleitfläche (10) auf einem metallischen Maschinenteil (1), die dafür geeignet ist, auf einer Gleitfläche eines Maschinengegenstücks zu gleiten, wobei das Maschinenteil (1), das eine vorbehandelte, ausreichend flache und glatte Gleitfläche (10) bei Raumtemperatur oder einer erhöhten Temperatur umfasst, die niedriger als die Temperatur der Plastifizierung oder der Schmelzpunkt des metallischen Materials ist, aus dem das Maschinenteil (1) besteht, von einer Schutzatmosphäre (70) umgeben wird, woraufhin die Gleitfläche (10) durch Richten eines Laserstrahls (55) zu vorbestimmten Bereichen (100; 100') auf der Oberfläche (10) hin behandelt wird, und zwar für eine ausreichende Zeit, dass ein Schmelzen des metallischen Materials auf der Oberfläche (10) in jedem ausgewählten Bereich (100; 100') des Maschinenteils (1), welches dem Laserstrahl (55) ausgesetzt ist, gewährleistet ist, wobei die Bewegung des Laserstrahls (55) über die Oberfläche (10), insbesondere unter Verwendung eines passenden Computeralgorithmus, vorbestimmt und gesteuert wird, der einerseits das Erreichen einer jeden gewünschten Abmessung (B1, B2) und andererseits auch das Erreichen einer jeden gewünschten Verteilung und Dichte von Bereichen (100; 100') auf der Oberfläche (10) des Maschinenteils (1) gewährleistet, welches den Laserstrahlen (55) ausgesetzt ist, **dadurch gekennzeichnet, dass** es die folgenden Schritte umfasst:
i) Aufbringen einer gleichmäßig verteilten Schicht (11) von metallischen Teilchen in Pulverform mit einer vorbestimmten und gleichmäßigen Dicke (Δ) über die vorbehandelte, flache und glatte Gleitfläche (10) des Maschinenteils (1), das von der Schutzatmosphäre (70) umgeben ist;
ii) Richten des Laserstrahls (55) zu jedem vorbestimmten Bereich (100) auf der Oberfläche (10) des Maschinenteils (1) hin, das mit einer Schicht (11) von metallischen Teilchen in Pulverform bedeckt ist, für mindestens einen solchen Zeitraum, dass die Pulverteilchen zusammen mit der sich darunter befindenden Oberfläche (10) vollständig oder zumindest teilweise geschmolzen werden, und zwar bis zu einem solchen Ausmaß, dass Teilchen miteinander und direkt oder indirekt auch mit der Oberfläche (10) verschmelzen können, was gegebenenfalls gefolgt ist von dem Bewegen des Laserstrahls (55) zu dem nächsten Bereich (100') auf der Oberfläche (10) des Maschinenteils (1) hin, das mit einer Schicht (11) von metallischen Teilchen in Pulverform bedeckt ist; und
iii) Entfernen jeglicher verbleibender metallischer Teilchen in Pulverform der Schicht (11), die miteinander oder mit der Oberfläche (10) des Maschinenteils (1) nicht verschmolzen, d. h. nicht verbunden sind, von der Oberfläche (10) des Maschinenteils (1),
wobei die Dicke (Δ) jeder aufgebrachten Schicht (11) von metallischen Teilchen in Pulverform auf der Gleitfläche (10) des Maschinenteils (1) innerhalb eines Bereichs zwischen 5 und 100 µm eingestellt wird,
und wobei in dem Schritt ii) der Laserstrahl (55) stets zu der Schicht (11) von metallischen Teilchen in Pulverform auf der vorbehandelten, flachen und glatten Gleitfläche (10) des Maschinenteils (1) innerhalb eines Bereichs (100, 100') gerichtet wird, dessen größte Abmessung (B1) bei Betrachtung auf der Oberfläche (10) 40 bis 100 µm beträgt, und wobei in dem Schritt ii) zwischen allen benachbarten, mit Laser behandelten Bereichen (100, 100') verbleibende, nicht behandelte Bereiche (101) vorhanden sind, die dem Laserstrahl (55) nicht ausgesetzt worden sind, wobei die kleinste Abmessung (B2) bei Betrachtung auf der Oberfläche (10) 5 bis 50 µm beträgt.

2. Verfahren nach Anspruch 1, wobei die Schritte i) bis iii) durch anschließende Schritte fortgesetzt werden, welche Folgende einschließen:
iv) gegebenenfalls Platzieren einer zusätzlichen gleichmäßig verteilten Schicht (11) von metallischen Teilchen in Pulverform mit einer vorbestimmten und gleichmäßigen Dicke (Δ) über einer zuvor geschmolzenen und verfestigten Schicht (11) auf der vorbehandelten, flachen und glatten Gleitfläche (10) des Maschinenteils (1), das von der Schutzatmosphäre (70) umgeben ist, wobei die Dicke oder Zusammensetzung jeder zusätzlichen Schicht (11) sich auch von der Dicke oder Zusammensetzung jeder vorherigen Schicht (11) unterscheiden kann, was wiederum von dem Aussetzen an Laserstrahlen (55) gemäß dem Schritt ii) gefolgt ist; und
v) endgültiges Entfernen jeglicher verbleibender metallischer Teilchen in Pulverform der Schicht (11), die miteinander oder mit der Oberfläche (10) eines jeden Maschinenteils (1) nicht verschmolzen, d. h. nicht verbunden sind, von der Oberfläche (10) des Maschinenteils (1).

3. Verfahren nach Anspruch 1 oder 2, **dadurch gekennzeichnet, dass** die metallischen Teilchen in Pulverform in jeder Schicht (11), die auf die Oberfläche (10) aufgebracht worden ist, metallische Teilchen in Pulverform oder gegebenenfalls Nanoteilchen mit einer chemischen Zusammensetzung sind, die zumindest annähernd der chemischen Zusammensetzung des Maschinenteils (1) in dem Bereich seiner Gleitfläche (10) ähnlich ist.

4. Verfahren nach Anspruch 1 oder 2, **dadurch gekennzeichnet, dass** die metallischen Teilchen in Pulverform in jeder Schicht (11), die auf die Oberfläche (10) aufgebracht worden ist, metallische Teilchen in Pulverform oder gegebenenfalls Nanoteilchen mit einer chemischen Zusammensetzung sind, die sich von der chemischen Zusammensetzung des Maschinenteils (1) in dem Bereich seiner Gleitfläche (10) unterscheidet, jedoch beim Schmelzen eine Legierung bildet oder zumindest das Verschmelzen von Teilchen miteinander und mit dem Material des Maschinenteils (1) ermöglicht.

5. Verfahren nach einem der Ansprüche 1 bis 4, **dadurch gekennzeichnet, dass**, um einen Laserstrahl (55) zu erzeugen, ein Laser (5) mit einer Leistung von 100 bis 1000 W und einer Bewegungsgeschwindigkeit des Laserstrahls (55) von 50 bis 5000 mm/s verwendet wird, so dass jede erreichte Temperatur in jedem ausgesetzten Bereich mindestens 2000 °C übersteigen sollte und die Intensität der Behandlung des Materials in Pulverform in der Schicht (11) mindestens 15 bis 20 cm³/h beträgt.

## Revendications

1. Procédé de traitement d'une surface de glissement (10) sur une pièce de machine métallique (1) qui est adéquate pour glisser sur une surface de glissement d'une contrepartie de la machine, dans lequel ladite pièce de machine (1) qui comprend une surface de glissement (10) prétraitée, suffisamment plate et lisse à température ambiante ou à température augmentée, qui est inférieure à la température de plastification ou au point de fusion dudit matériau métallique dont est constituée la pièce de machine (1), est entourée d'une atmosphère protectrice (70), après quoi ladite surface de glissement (10) est traitée en dirigeant un faisceau laser (55) vers des zones prédéterminées (100 ; 100') sur ladite surface (10), à savoir pendant une période suffisante afin que la fusion du matériau métallique sur la surface (10) soit garantie dans chaque zone sélectionnée (100 ; 100') de ladite pièce de machine (1), qui est exposée audit faisceau laser (55), dans lequel le mouvement dudit faisceau laser (55) à travers la surface (10) est prédéterminé et commandé, plus particulièrement en utilisant un algorithme informatisé approprié qui garantit, d'une part, la réalisation de chaque dimension souhaitée (B1, B2) et, d'autre part, la réalisation également de chaque répartition et densité de zones (100 ; 100') souhaitées sur ladite surface (10) de ladite pièce de machine (1), qui est exposée auxdits faisceaux laser (55), **caractérisé en ce qu'**il comprend les étapes
i) d'application d'une couche uniformément répartie (11) de particules métalliques sous forme de poudre ayant une épaisseur prédéterminée et uniforme (Δ) sur ladite surface de glissement (10) prétraitée, plate et lisse de la pièce de machine (1), entourée de ladite atmosphère protectrice (70) ;
ii) d'orientation dudit faisceau laser (55) vers chaque zone prédéterminée (100) sur ladite surface (10) de la pièce de machine (1), recouverte d'une couche (11) de particules métalliques sous forme de poudre, pendant au moins une période telle que les particules de poudre conjointement avec la surface (10) en dessous sont complètement ou au moins partiellement fondues, à savoir dans une mesure telle que des particules peuvent fusionner les unes avec les autres et directement ou indirectement également avec ladite surface (10), qui est suivie facultativement du déplacement du faisceau laser (55) vers la zone suivante (100') sur ladite surface (10) de la pièce de machine (1), recouverte d'une couche (11) de particules métalliques sous forme de poudre ; et
iii) d'enlèvement, de la surface (10) de la pièce de machine (1), de toutes particules métalliques sous forme de poudre de ladite couche (11), restantes non fusionnées, c'est-à-dire non liées, les unes avec les autres ou avec la surface (10),
dans lequel l'épaisseur (Δ) de chaque couche appliquée (11) de particules métalliques sous forme de poudre sur ladite surface de glissement (10) de la pièce de machine (1) est ajustée au sein d'une plage située entre 5 et 100 µm, et dans lequel à l'étape ii), le faisceau laser (55) est toujours orienté vers la couche (11) de particules métalliques sous forme de poudre sur ladite surface de glissement (10) prétraitée, plate et lisse de la pièce de machine (1) au sein d'une zone (100, 100'), dont la plus grande dimension (B1), lors d'une observation sur ladite surface (10), est de 40 à 100 µm,
et dans lequel à ladite étape ii) entre chaque zone voisine traitée au laser (100, 100'), il y a des zones non traitées restantes (101) qui n'ont pas été exposées au faisceau laser (55), dont la plus petite dimension (B2), lors d'une observation sur ladite surface (10), est de 5 à 50 µm.

2. Procédé selon la revendication 1, dans lequel lesdites étapes i) à iii) sont suivies des étapes ultérieures qui incluent
iv) la mise en place facultative d'une couche supplémentaire uniformément répartie (11) de particules métalliques sous forme de poudre ayant une épaisseur prédéterminée et uniforme (Δ) sur une couche précédemment fondue et solidifiée (11) sur la surface de glissement (10) prétraitée, plate et lisse de la pièce de machine (1), entourée de ladite atmosphère protectrice (70), dans lequel l'épaisseur ou la composition de chaque couche supplémentaire (11) peut aussi différer de l'épaisseur ou de la composition de chaque couche précédente (11), qui est à nouveau suivie de l'exposition aux faisceaux laser (55) selon ladite étape (ii) ; et
(v) enlèvement final, de la surface (10) de la pièce de machine (1), de toutes particules métalliques sous forme de poudre de ladite couche (11) restantes non fusionnées, c'est-à-dire non liées, les unes avec les autres ou avec la surface (10) de chaque pièce de machine (1).

3. Procédé selon la revendication 1 ou 2, **caractérisé en ce que** lesdites particules métalliques sous forme de poudre dans chaque couche (11) appliquée à ladite surface (10) sont des particules métalliques sous forme de poudre ou facultativement des nanoparticules ayant une composition chimique qui est au moins approximativement semblable à la composition chimique de la pièce de machine (1) dans la zone de sa surface de glissement (10).

4. Procédé selon la revendication 1 ou 2, **caractérisé en ce que** lesdites particules métalliques sous forme de poudre dans chaque couche (11) appliquée à la surface (10) sont des particules métalliques sous forme de poudre ou facultativement des nanoparticules ayant une composition chimique qui diffère de la composition chimique de la pièce de machine (1) dans la zone de sa surface de glissement (10), cependant, lors de la fusion, forme un alliage ou permet au moins la fusion de particules les unes avec les autres et avec le matériau de la pièce de machine (1).

5. Procédé selon l'une quelconque des revendications 1 à 4, **caractérisé en ce qu'**afin de générer un faisceau laser (55), est utilisé un laser (5) ayant une puissance de 100 à 1 000 W et une vitesse de mouvement du faisceau laser (55) de 50 à 5 000 mm/s, de sorte que chaque température atteinte dans chaque zone exposée devrait excéder au moins 2 000°C, et l'intensité du traitement du matériau sous forme de poudre dans ladite couche (11) est de 15 à 20 cm³/h au moins.
